# EUROPEAN PATENT APPLICATION

(11) **EP 4 482 176 A1**
(43) Date of publication of application: **25.12.2024**
(21) Application number: 22926390.0
(22) Date of filing: 15.02.2022
(51) Int. Cl.: H04W 4/00, H04W 24/00

(54) **SENSING SERVICE PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: WU, Jinhua, Beijing 100085 (CN); LIU, Jianning, Beijing 100085 (CN); SHEN, Yang, Beijing 100085 (CN)
(74) Representative: Gunzelmann, Rainer
(86) International application number: PCT/CN2022/076382
(87) International publication number: WO 2023/155052

(57) **Abstract**

The embodiments of the present disclosure provide a sensing service processing method and apparatus, and a communication device and a storage medium. The sensing service processing method which is executed by a first network element may comprise: acquiring an execution scope of a sensing service (S110); and sending scope information of the execution scope to a second network element (S 120), wherein the scope information is used by the second network element to determine an executor of the sensing service, the second network element being a network element for determining the executor; and the executor being a network element or a communication device for collecting data of a sensing object of the sensing service and processing and/or reporting sensing data.

## Description

### TECHNICAL FIELD

The disclosure relates to, but is not limited to the technical field of wireless communication, and more particularly, to a method and an apparatus for processing sensing service, a communication device and a storage medium.

### BACKGROUND

Advances in network communication, artificial intelligence (AI) and other technologies have greatly increased the intelligence of many industries. Emerging services such as smart transportation, smart city, smart medical care, smart factory, and driverless driving have been deeply integrated with a communication network and are entering a new stage of development. In addition to communication requirements, the above-mentioned services also have requirements for sensing services. For example, during a driving process of a vehicle, the driverless service needs to perceive environmental information around the vehicle in real time, such as a distance from a vehicle ahead, weather conditions, traffic light signals, etc., to adjust a driving policy of the vehicle in real time, to ensure the safety of autonomous driving. The realization of the current sensing function basically relies on specialized sensing equipment or devices, such as cameras and radars. Special-purpose equipment is often expensive and inflexible in deployment. Therefore, there are many limitations in the usage scenarios and performance of the sensing services.

With the development and continuous evolution of mobile communication technology, it has now developed into a network having a large number of mobile network base stations and intelligent terminals, and the functions of the base stations and the terminals are continuously enhanced. If base stations deployed with seamless coverage are given a sensing function, it may lead to the rapid development, growth, and popularization of many intelligent services that rely on the sensing function.

### SUMMARY

Embodiments of the disclosure provide a method and an apparatus for processing sensing service, a communication device and a storage medium.

Embodiments of a first aspect of the disclosure provide a method for processing a sensing service, performed by a first network element. The method includes:
obtaining an execution range of a sensing service; and
sending range information of the execution range to a second network element, in which the range information is used for the second network element to determine an executor of the sensing service.

Based on the above solution, before obtaining the execution range of the sensing service, further including:
receiving an authorization request for the sensing service;
in which the authorization request for the sensing service includes: sensing service type information and/or location information of a user of the sensing service.

Based on the above solution, obtaining the execution range of the sensing service includes:
determining the execution range of the sensing service based on the authorization request for the sensing service.

Based on the above solution, determining the execution range of the sensing service based on the authorization request for the sensing service includes:
determining the execution range of the sensing service based on the authorization request for the sensing service and at least one of user subscription information or an operation policy of the sensing service.

Based on the above solution, the execution range includes at least one of:
a cell where a user of the sensing service is located;
the cell where the user of the sensing service is located and one or more neighbor cells of the cell where the user of the sensing service is located;
a tracking area (TA) where the user of the sensing service is located;
the TA where the user of the sensing service is located and one or more neighbor TAs of the TA where the user of the sensing service is located; or
a preset range centered on a location of the user of the sensing service.

Based on the above solution, the range information includes at least one of:
an area identified by a TA collection;
an area identified by latitude and longitude; or
an area identified by a cell collection.

Based on the above solution, the executor includes:
a base station located within the execution range;
   and/or
a communication terminal located within the execution range.

Embodiments of a second aspect of the disclosure provide a method for processing a sensing service, performed by a second network element. The method includes:
receiving range information of an execution range of a sensing service; and
determining an executor of the sensing service located within the execution range according to the range information; in which the executor includes a network element or a communication device that collects data of a sensing target of the sensing service, processes and/or reports sensing data.

Based on the above solution, the method further includes:
sending an operation instruction of the sensing service to the executor of the sensing service; in which the operation instruction is configured to trigger the executor located within the execution range to perform an operation related to the sensing service.

Based on the above solution, the method further includes:
sending an authorization request for the sensing service to a first network element; in which the authorization request for the sensing service includes: sensing service type information and/or location information of a user of the sensing service;
in which receiving the range information of the execution range of the sensing service includes:
receiving execution range information of the sensing service returned based on the authorization request for the sensing service.

Based on the above solution, the executor includes:
a base station located within the execution range;
   and/or
a communication terminal located within the execution range.

Embodiments of a third aspect of the disclosure provide an apparatus for processing a sensing service. The apparatus includes:
an obtaining module, configured to obtain an execution range of a sensing service; and
a first sending module, configured to send range information of the execution range to a second network element, in which the range information is used for the second network element to determine an executor of the sensing service; in which the second network element is a network element that determines the executor, the executor is a network element or a communication device that collects data of a sensing target of the sensing service, processes and/or reports sensing data.

Based on the above solution, the apparatus further includes:
a first receiving module is configured to receive an authorization request for the sensing service before obtaining the execution range of the sensing service;
in which the authorization request for the sensing service includes: sensing service type information and/or location information of a user of the sensing service.

Based on the above solution, the obtaining module is configured to determine the execution range of the sensing service based on the authorization request for the sensing service.

Based on the above solution, the obtaining module is configured to determine the execution range of the sensing service based on the authorization request for the sensing service and at least one of user subscription information or an operation policy of the sensing service.

Based on the above solution, the execution range includes at least one of:
a cell where a user of the sensing service is located;
the cell where the user of the sensing service is located and one or more neighbor cells of the cell where the user of the sensing service is located;
a tracking area (TA) where the user of the sensing service is located;
the TA where the user of the sensing service is located and one or more neighbor TAs of the TA where the user of the sensing service is located; or
a preset range centered on a location of the user of the sensing service.

Based on the above solution, the range information includes at least one of:
an area identified by a TA collection;
an area identified by latitude and longitude; or
an area identified by a cell collection.

Based on the above solution, the executor includes:
a base station located within the execution range;
   and/or
a communication terminal located within the execution range.

Embodiments of a fourth aspect of the disclosure provide an apparatus for processing a sensing service. The apparatus includes:
a second receiving module, configured to receive range information of an execution range of a sensing service; and
a determining module, configured to determine an executor of the sensing service located within the execution range according to the range information; in which the second network element is a network element that determines the executor, the executor includes a network element or a communication device that collects data of a sensing target of the sensing service, processes and/or reports sensing data.

Based on the above solution, the apparatus further includes:
a second sending module, configured to send an operation instruction of the sensing service to the executor of the sensing service.

Based on the above solution, the second sending module is configured to send an authorization request for the sensing service to a first network element; in which the authorization request for the sensing service includes: sensing service type information and/or location information of a user of the sensing service;
in which receiving the range information includes:
receiving execution range information of the sensing service returned based on the authorization request for the sensing service.

Based on the above solution, the executor includes:
a base station located within the execution range;
   and/or
a communication terminal located within the execution range.

Embodiments of a fifth aspect of the disclosure provide a communication device, including a processor, a transceiver, a memory, and an executable program stored on the memory and capable of being executed by the processor. When the processor executes the executable program, the method for processing a sensing service provided in the embodiments of the first aspect or the second aspect of the disclosure is performed.

Embodiments of a sixth aspect of the disclosure provide a computer storage medium having an executable program stored thereon. When the executable program is executed by a processor, the method for processing a sensing service provided in the embodiments of the first aspect or the second aspect of the disclosure is performed.

With the technical solution provided by embodiments of the present disclosure, the execution range of the sensing service may be obtained before performing the sensing service, thereby reducing unnecessary executions within an unnecessary execution range caused by the arbitrarily determined execution range, reducing network overhead, and also reducing the problems of poor sensing quality, such as poor accuracy of sensing results, failure of sensing, caused by a too small execution range.

It should be understood that the above general description and the following detailed description are only exemplary and explanatory, and do not limit the embodiments of the present disclosure.

### BRIEF DESCRIPTION OF THE DRAWINGS

The drawings, which are incorporated into the specification and constitute a part of the specification, illustrate embodiments in conformity with the disclosure, and serve to explain the principle of the disclosure together with the specification.
FIG. 1 is a schematic diagram of a wireless communication system according to an embodiment of the disclosure.
FIG. 2 is a flowchart of a method for processing a sensing service according to an embodiment of the disclosure.
FIG. 3 is a schematic diagram illustrating an execution of a radar-based sensing service according to an embodiment of the disclosure.
FIG. 4 is a flowchart of a method for processing a sensing service according to an embodiment of the disclosure.
FIG. 5 is a flowchart of a method for processing a sensing service according to an embodiment of the disclosure.
FIG. 6 is a flowchart of a method for processing a sensing service according to an embodiment of the disclosure.
FIG. 7 is a flowchart of a method for processing a sensing service according to an embodiment of the disclosure.
FIG. 8 is a flowchart of a method for processing a sensing service according to an embodiment of the disclosure.
FIG. 9 is a flowchart of a method for processing a sensing service according to an embodiment of the disclosure.
FIG. 10 is a block diagram of an apparatus for processing a sensing service according to an embodiment of the disclosure.
FIG. 11 is a block diagram of an apparatus for processing a sensing service according to an embodiment of the disclosure.
FIG. 12 is a block diagram of a communication device according to an embodiment of the disclosure.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all implementations consistent with embodiments of the disclosure. Rather, they are merely examples of apparatuses and methods consistent with some aspects of embodiments of the disclosure as detailed in the appended claims.

The terms used in embodiments of the disclosure are only for the purpose of describing specific embodiments and are not intended to limit the embodiments of the disclosure. The singular forms "a" and "the" used in the embodiments of the disclosure and the appended claims are also intended to include plural forms, unless the context clearly indicates otherwise. It should also be understood that the term "and/or" used in the disclosure means and includes any or all possible combinations of one or more associated listed items.

It should be understood that, although the terms first, second, third, etc. may be used in embodiments of the disclosure to describe various information, such information shall not be limited to these terms. These terms are only used to distinguish the same type of information. For example, without departing from the scope of the disclosure, first information may also be referred to as second information, and similarly, and the second information may also be referred to as the first information. Depending on the context, for example, the word "if' as used herein may be interpreted as "while" or "when" or "in response to determining".

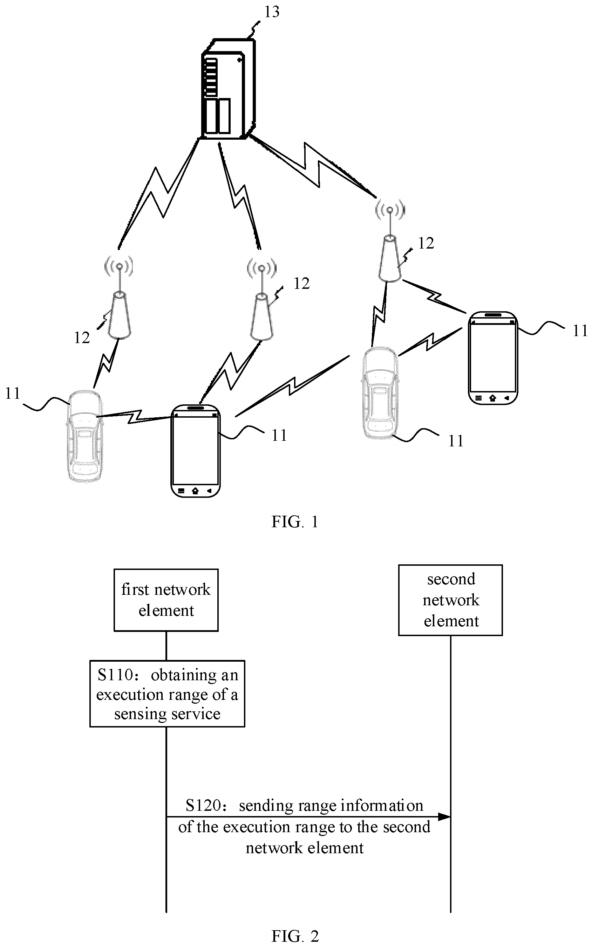

With reference to FIG. 1, FIG. 1 illustrates schematic diagram of a wireless communication system according to an embodiment of the disclosure. As illustrated in FIG. 1, the wireless communication system is a communication system based on cellular mobile communication technology, and the wireless communication system may include: several user equipments (UEs) 11 and several access devices 12.

The UE 11 may be may be a device that provides voice and/or data connectivity to a user. The UE 11 may communicate with one or more core networks via a Radio Access Network (RAN). The UE 11 may be an Internet of Things (IoT) user equipment, such as a sensor device, a mobile phone, and a computer with an IoT user equipment. For example, UE 11 may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a user equipment (UE). Or, the UE 11 may be an unmanned aerial vehicle device. Or, the UE 11may be an in-vehicle device, for example, an electronic control unit (ECU) having a wireless communication function, or a wireless communication device external to the ECU. Or, the UE 11 can also be a roadside device, for example, a street light, a signal light, or other roadside devices having the wireless communication function.

The access device 12 may be a network device in the wireless communication system. The wireless communication system may be a fourth generation mobile communication technology (4G) system, also known as a long term evolution (LTE) system, or, a 5G system, also called a new radio (NR) system or a 5G NR system. Alternatively, the wireless communication system may also be a next-generation system of the 5G system. An access network in the 5G system may be called a New Generation-Radio Access Network (NG-RAN), or a machine-type communication (MTC) system.

The access device 12 may be an evolved access device (eNB) employed in a 4G system. Or, the access device 12 may be an access device (gNB) with a centralized distributed architecture employed in a 5G system. When the access device 12 adopts the centralized distributed architecture, it usually includes a Central Unit (CU) and at least two Distributed Units (DUs). The CU is equipped with protocol stacks of a Packet Data Convergence Protocol (PDCP) layer, a Radio Link Control (RLC) layer, or a Media Access Control (MAC) layer. The DU is equipped with a protocol stack of a physical (PHY) layer, and the specific implementation of the access device 12 is not limited in embodiments of the disclosure.

A wireless connection can be established between the access device 12 and the UE 11 via a radio interface. The radio interface is a radio interface based on the 5G standard, such as a NR. Or, the radio interface may also be a radio interface based on the standard of a next generation of 5G.

In some embodiments, an End to End (E2E) connection can also be established between the UEs 11 in scenarios, such as, Vehicle to Vehicle (V2V) communication, Vehicle to Infrastructure (V2I) communication, and Vehicle to Pedestrian (V2P) communication in Vehicle to Everything (V2X) communication.

In some embodiments, the above wireless communication system may also include a network management device 13.

The plurality of access device 12 are connected to the network management device 13 respectively. The network management device 13 may be a core network device in the wireless communication system. For example, the network management device 13 may be a mobility management entity (MME). Alternatively, the network management device may also be other core network devices, such as a Serving GateWay (SGW), a Public Data Network GateWay (PGW), a Policy and Charging Rules function unit (PCRF) or a Home Subscriber Server (HSS), etc. Embodiments of the disclosure does not limit the implementation form of the network management device 13.

As illustrated in FIG. 2, embodiments of the disclosure provide a method for processing a sensing service. The method is performed by a first network element, and the method includes following steps.

S 110, an execution range of a sensing service is obtained.

S 120, range information of the execution range is sent to a second network element, in which the range information is used for the second network element to determine an executor of the sensing service.

The second network element is a network element that determines the executor. The executor includes a network element or a communication device that collects data of a sensing target of the sensing service, processes and/or reports sensing data. The second network element is different from the first network element.

The first network element may be a core network element. In an embodiment, the core network element includes, but is not limited to, a policy control function (PCF) and/or a sensing function (SF). In short, the first network element may be various network functions that perform sensing service decisions. The second network element may be a network element that determines the executor of the sensing service according to the execution range. The second network element may also be a core network element. For example, the second network element may be an Access Management Function (AMF).

The sensing service is a service that senses a location and/or a behavior of a sensing target through transmission, collection, and processing of sensing signals.

For example, a base station and/or a UE can perform data collection, data processing, and reporting of the sensing target. In embodiments of the disclosure, the sensing service involves sensing based on wireless signals.

For example, the sensing service in embodiments of the disclosure may include, but is not limited to, at least one of:
a service of detecting aircraft;
an obstacle detection service;
a maritime navigation-related service;
a service related to autonomous driving or assisted driving;
a sensing service of weather detection;
a sensing service related to terrain detection and the like.

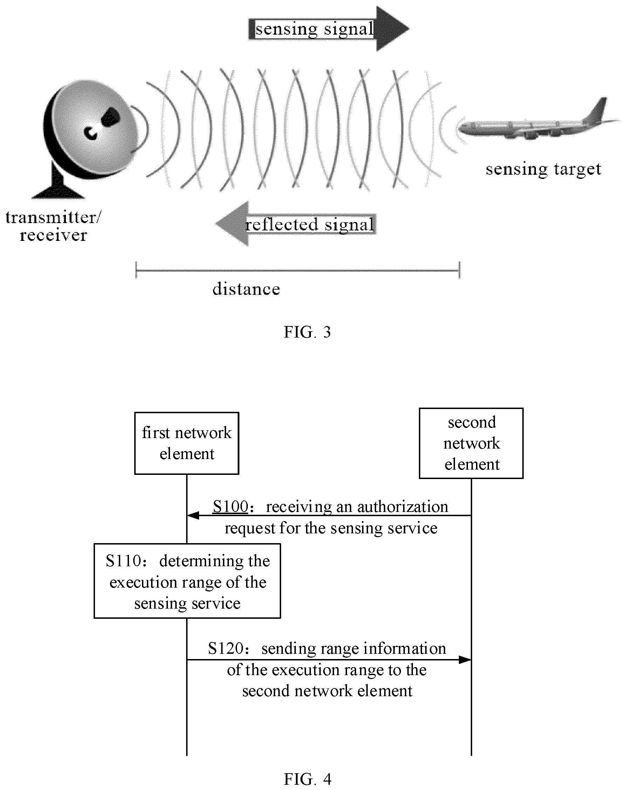

FIG. 3 illustrates a sensing service based on wireless sensing of radar waves.

A transmitter transmits a radar signal, and the radar signal may be reflected or absorbed when it encounters an obstacle during transmission. A reflected radar wave may be received by a receiver. Based on the received radar wave, the receiver can implement radar ranging, radar detection and other functions to know a location, volume and/or shape and other parameters of the obstacle.

The transmitter transmits a radar signal, and the radar signal may be reflected or absorbed when it encounters an obstacle during transmission. The reflected radar wave may be received by the receiver. Based on the received radar wave, the receiver can implement radar ranging, radar detection and other functions to know the location, volume and/or shape and other parameters of the obstacle.

As illustrated in FIG 3, according to sending and receiving time points of radar waves, a distance between a sensing target and a device where the transmitter and receiver are located, and a direction of the sensing target relative to the device where the transmitter and receiver are located can be determined.

The execution range of the sensing service may be a range of collecting and processing the sensing data of the sensing service. For example, a spatial range and/or a geographical range of collecting the sensing data.

After the execution range is determined, the range information indicating the execution range is sent to the second network element. The second network element may determine the executor of the sensing service according to the range information.

The executor of the sensing service may include: a device that performs collection, processing and reporting data of the sensing service according to a network instruction.

A user of the sensing service may request a network to use a sensing service, which require information about surrounding environment of the user to determine a subsequent behavior of the user. For example, during autonomous driving or assisted driving, the user of the sensing service may be an autonomous or assisted driving vehicle, which includes but is not limited to a car, a ground-movable robot, or a low-altitude flying device.

In this way, by determining the execution range, a range of data collection, processing and/or reporting appropriate to a current sensing service can be given, and only devices within the execution range can collect, process and report the data of the sensing service, and a device outside the execution range can does not need to perform the sensing service, thus avoiding unnecessary data collection and processing processes caused by too large execution range of the sensing service, reducing processing and transmission overhead of the network, and effectively avoiding problems of poor sensing quality, such as poor accuracy of sensing results, a failure of sensing, caused by a too small execution range.

In some embodiments, as illustrated in FIG. 4, before obtaining the execution range of the sensing service, the method further includes a following step.

S 100, an authorization request for the sensing service is received.

For example, the service authorization request may include information about a sensing service type and/or a user of the sensing service. The information of the user of the sensing service may at least include location information of the user of the sensing service and/or type information of the user of the sensing service.

In some embodiments, the information about the user of the sensing service may further includes predetermined movement trajectory information of the user of the sensing service and/or movement direction information of the user of the sensing service, etc. The predetermined movement trajectory information of the user of the sensing service indicates a predetermined movement trajectory of the user of the sensing service, such as a navigation trajectory of an automatic driving or assisted driving vehicle. The movement direction information indicates a movement direction of the user of the sensing service, such as a movement direction of an autonomous driving or assisted driving car.
The sensing service type may be used to determine area and/or shape of the execution range;

The location information of the user of the sensing service may include: the longitude and latitude of the user of the sensing service, a cell where the user of the sensing service is located, a tracking area where the user of the sensing service is located, or a cell collection where the user of the sensing service is located. The cell collection may include the cell where the user of the sensing service is located and neighbor cells of the cell where the user of the sensing service is located, etc.

The type information of the user of the sensing service may indicate a type of the user of the sensing service. Different types of users of the sensing service have different movement speeds. For example, for an autonomous driving vehicle, compared to a sensing service of flight navigation, the speed of the aircraft may be faster than that of the autonomous driving vehicle. In this way, the information about the user of the sensing service can also be used to determine the execution range.

In short, on the one hand, the authorization request for the sensing service can be used to request the first network element to determine whether to authorize the sensing service. On the other hand, the authorization request for the sensing service includes the type of the sensing service and/or location information of the user of the sensing service, thus, the authorization request for the sensing service can be used to determine the execution range.

Therefore, in some embodiments, the S 110 may include: determining the execution range of the sensing service based on the authorization request for the sensing service.

In an embodiment, determining the execution range of the sensing service based on the authorization request for the sensing service includes at least one of:
determining a boundary of the execution range of the sensing service according to the location information of the user of the sensing service;
   and/or,
determining a center point of the execution range of the sensing service according to the location information of the user of the sensing service;
   and/or,
determining the area and/or shape of the execution range of the sensing service according to the type information of the user of the sensing service.

For example, for a moving car, when determining the boundary of the execution range based on the location information of the user of the sensing service and a driving direction of the user of the sensing service, a rear boundary line of a location of the user of the sensing service may be determined as a boundary of the execution range based on the location information.

For another example, during the movement of the car, the car may move forward, backward, left or right. Thus, the center point of the execution range of the sensing service can be determined, and the execution range may be a circular area, an elliptical area, and/or a rectangular area.

For example, a car moving on a road acts as the user of the sensing service, and when the type information indicates a car, the shape of the execution range of the sensing service may be a band-shaped area extending along a road.

In some embodiments, the S 110 may include:
determining the execution range of the sensing service based on the authorization request for the sensing service and at least one of user subscription information or an operation policy of the sensing service.

The user subscription information may come from a user data management (UDM) element or a unified data repository function (Unified Data Repository, UDR) element.

In some embodiments, the user subscription information can be used to determine whether the user of the sensing service subscribes to the sensing service, and/or to determine a sensing service corresponding to which kind of executor is subscribed to by the user of the sensing service. For example, the executor of the sensing service may include: a base station and/or a terminal device. Some users of the sensing service only subscribe to the sensing service executed by the base station, or separately subscribe to the sensing service executed by the terminal device, or subscribe to both the sensing service executed by the base station and the sensing service executed by the terminal device.

The operation policy of the sensing service may be a policy configured by a communication operator, and may be used to indicate at least one of:
a geographical range in which a communication device is able to provide the sensing service;
a communication device that cannot provide the sensing service;
a communication device that provides the sensing service.

For example, for key protection areas of military and/or science and technology, and/or protection areas of important facilities. The important facilities include, but are not limited to, an area where a hydraulic engineering device and/or an important electric engineering device is located.

The above are only examples of the limited content of the operation policy of the sensing service, and the specific implementation is not limited thereto.

In conclusion, the operation policy of the sensing service can also be used to determine the execution range of.
In some embodiments, the execution range includes at least one of:
a cell where the user of the sensing service is located;
a cell where the user of the sensing service is located and one or more neighbor cells of the cell where the user of the sensing service is located;
a tracking area (TA) where the user of the sensing service is located;
the TA where the user of the sensing service is located and one or more neighbor TAs of the TA where the user of the sensing service is located; or
a preset range centered on a location of the user of the sensing service.

The above are only examples of the execution range, and the specific implementation may not be limited to the above examples.

The preset range may be a range of a circular area and/or an elliptical area, etc.

In some embodiments, the range information includes at least one of:
an area identified by a TA collection;
an area identified by latitude and longitude; or
an area identified by a cell collection.

A TA collection identification may indicate a TA collection.

The TA collection may include one or more TAs. In some embodiments, the multiple TAs in the TA collection may be multiple adjacently distributed TAs. For example, the TA collection may be a register area (RA).

A network coverage area can be divided into multiple geographical areas in advance. These geographical areas can be identified by the longitude and latitude of the center point of the corresponding geographical area, or can be identified by the longitude and latitude of multiple boundary points of the corresponding geographical area.

The cell collection identification may indicate a cell collection.

The cell collection may include one or more cells.

In some embodiments, multiple cells in the cell collection may be multiple cells that are adjacently distributed.

In an embodiment, the executor includes:
a base station located within the execution range;
   and/or
a communication terminal located within the range of execution.

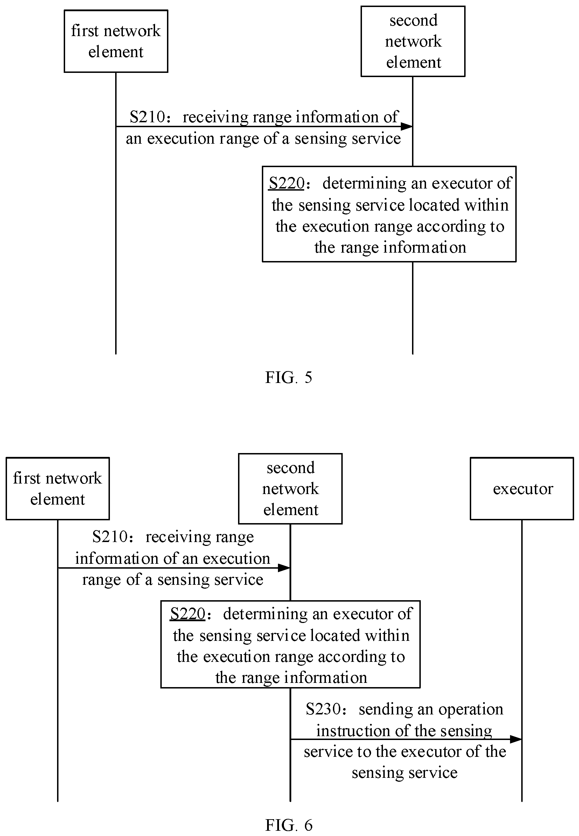

As illustrated in FIG. 5, embodiments of the disclosure provide a method for processing a sensing service, which is performed by a second network element. The method includes following steps.

S210, range information of an execution range of a sensing service is received

S220, an executor of the sensing service located within the execution range is determined according to the range information.

The second network element includes but is not limited to an access management function (Access Management Function, AMF).

After the second network element receives the range information from a first network element, it may select one or more candidate devices within the execution range and being able to execute the sensing service as the executor of the sensing service. In this way, unnecessary executions within an unnecessary execution rang caused by random determination can be reduced, network overhead can be reduced, and problems of poor sensing quality, such as poor accuracy of sensing results, a failure of sensing, caused by a too small execution range can also be reduced.

In some embodiments, as illustrated in FIG. 6, the method further includes a following step.

S230, an operation instruction of the sensing service is sent to the executor of the sensing service.

The operation instruction may be used to trigger the executor located within the execution range to execute an operation related to the sensing service.

Further, the related operation may include operations such as data collection of a sensing target (collecting and obtaining sensing data), processing of the sensing data, and/or reporting of the sensing data.

The operation instruction may include an operation command, which triggers the executor of the sensing service to collect, process and/or report the sensing data. The operation instruction may include a collection instruction, a processing instruction and/or a reporting instruction.

In some embodiments, the operation instruction may further include an operation parameter, for the executor to perform an operation related to the sensing service according to the operation parameter.

For example, for a data collection operation of the sensing service, the operating parameter may include a collection frequency and/or time range of data collection, and a type of sensing data collected. For example, the type of the sensing data can be distinguished according to a signal type, which may include a sensing data type for collecting radar signals, and/or a sensing data type for collecting laser signals.

In some embodiments, the range information of the execution range of the sensing service may be determined by the first network element based on a service request for the sensing service and actively pushed to the second network element.

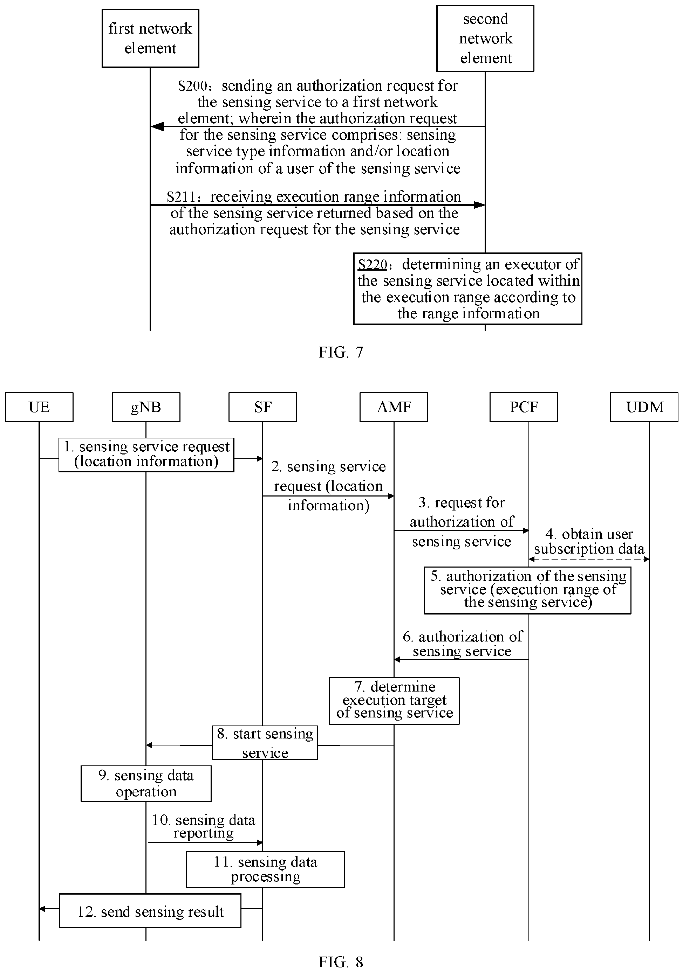

In some embodiments, as illustrated in FIG. 7, the method further includes following steps.

S200, an authorization request for the sensing service is sent to the first network element; the authorization request for the sensing service includes sensing service type information and/or location information of a user of the sensing service.

The S210 may include S211, receiving execution range information of the sensing service returned based on the authorization request for the sensing service.

For example, after receiving a sensing service request, the second network element sends the authorization request for the sensing service to the first network element.

The authorization request for the sensing service may carry sensing service type information and/or information of the user of the sensing service. The information of the user of the sensing service includes but is not limited to the location information of the user of the sensing service, type information of the user of the sensing service, information of a predetermined movement trajectory of the sensing service and/or information of a moving direction of the user of the sensing service. In some embodiments, the information of user of the sensing services may also include speed information of user of the sensing services, etc.

In some embodiments, the executor includes:
a base station located within the execution range;
   and/or
a communication terminal located within the range of execution.

The base station located within a mobile range may send sensing signals, and then collect reflected signals generated based on the sensing signals to realize the collection of the sensing service. The Base station located within the mobility range may include an evolved base station (eNB) and/or a next-generation base station (gNB).

The communication terminal located within the mobile range may include various mobile phones, road monitoring devices, and/or vehicle-mounted devices located within the execution range. In short, various terminals that can perform the sensing service can serve as the executor.

In embodiments of the disclosure, by giving a sensing function to the base station or the communication terminal, data collection, processing and reporting is implemented, thereby realizing the sensing services relying on the mobile communication networks. In addition, by taking into account the usage efficiency of the sensing service and the rational usage of network resources, sensing data is collected within a reasonable sensing range, avoiding excessive overhead of network processing and transmission resources caused by an excessive collection range which also seriously affecting usage efficiency of the sensing service. The solution may include followings.

A sensing service decision function (such as, PCF or SF, etc.) receives an authorization request for a sensing service, and decides an execution range of the sensing service according to the authorization request.

According to the authorization request for the sensing service, basis information used to decide the execution range of the sensing service may include at least one of the following:
location information of a user of the sensing service;
sensing service type information;
location information or an identification of an executor of the sensing service;
an operation policy of the sensing service.

The authorization request for the sensing service may include location information of the user of the sensing service.

The location information of the user of the sensing service includes at least one of the following:
latitude and longitude information of the user of the sensing service;
a TA (tracking area);
an identification of a base station;
a RA (register area), etc.

The authorization request of the service comes from the user of the sensing service or a SF.

The execution range of the sensing service determined based on the authorization request for the sensing service may include:
range information of the execution range of the sensing service, such as the RA, or an area with the location information of the user of the sensing service as the center and with an authorized distance as the radius.

The sensing service decision function sends the range information of the execution range of the sensing service to a network element (such as the AMF) of a core network. The network element of the core network determines the executor of the sensing service that is in the execution area according to the execution range of the sensing service. The executor may be a base station or a communication terminal. The sensing service decision function sends an operation instruction of the sensing service to the executor of the sensing service. The operation instruction may include a start instruction, and/or a stop instruction.

The range information of the execution range of the sensing service may be an identification set of executors of the sensing service. The identification set may include, for example, an identification set of base stations, or an identification set of communication terminals.

The sensing service decision function sends the range information of the execution range of the sensing service to a network element of the core network (such as the AMF). The network element of the core network issues a sensing service start instruction to the executor of the sensing service according to the execution range of the sensing service.

In an embodiment, the UE is a user of the sensing service, such as a car traveling at high speed. The gNB is an executor of the sensing service and is used to collect, process and transmit sensing data according to authorization.

The SF is a sensing function and is configured to receive a sensing service request, trigger the initiation of the sensing service, and collect and process sensing data.

The PCF is configured to perform sensing service authorization and determine the execution range based on service characteristics such as the sensing service type, the information of the user of the sensing service, and/or the operation policy of the sensing service.

The method for processing a sensing service provided by embodiments of the disclosure may include followings.
1. An SF receives a sensing service request from a UE (a user of a sensing service). The request message contains location information of the UE, such as Global Navigation Satellite System (GNSS) information.
2. The SF initiates a request for starting the sensing service to the AMF, and the request message contains a sensing service type and/or the location information of the UE.
3. An AMF initiates an authorization request for the sensing service to a PCF. The authorization request for the sensing service includes the sensing service type information. The AMF may be other network elements (such as, a Session Management Function (SMF) and/or a User Plane Function (UPF), etc.). The PCF may be other network elements having an authorization function, and the SF may directly initiate an authorization request for the sensing service to the PCF.
4. The PCF obtains user subscription information from UDM.
5. The PCF authorizes the sensing service based on the sensing service type, the user subscription information, determination of an operation policy of the sensing service and other information, and determines a sensing data target parameter and/or the execution range of the sensing service. The execution range may be a coverage area centered on the UE location, and/or with a specified distance as a radius, and the like.
6. The PCF issues a sensing service authorization to the AMF, and the service authorization may include the execution range of the sensing service and/or the as sensing data target parameter, etc.
7. The AMF determines information of a gNB covered by the execution range of the sensing service according to the execution range of the sensing service and location information of the gNB.
8. The AMF sends a start instruction of the sensing service to the corresponding gNB. The start instruction of the sensing service contains the authorization information such as information of a collection target of the sensing service.
10. The gNB performs a sensing data operation, which may include followings. The gNB receives the authorization information, starts sensing data collection, and completes preliminary processing of part of the sensing data. For example, the gNB collects information such as signal strength and/or Doppler frequency shift and other information, and performs calculations to obtain a size, a location and movement speed of the collection target. If the authorization information only requires the gNB to collect sensing data, the gNB may not process the aforementioned sensing data.
10. Sensing data is reported. For example, the gNB reports the sensing collection data or the target parameter of the sensing processing to the SF. The communication process between the gNB and the SF can be established through a direct channel between the gNB and the SF. In this case, the AMF can send identification information of the SF to the gNB, and the gNB discovers the SF and establishes a communication connection based on the identification information of the SF. Or the gNB establishes a communication connection with the SF through the UPF, and The SF, and reports the sensing data to the SF.
11. Sensing data processing, which may include following. The SF receives the sensing data. If the sensing data is original collected data, the SF processes the sensing data to generate a sensing result.
12. The SF sends the sensing result to the UE.

In an embodiment, UE1 is a user of the sensing service. UE2 is an executor of the sensing service, and is used for collecting, processing and transmitting the sensing data according to authorization.

A method for processing a sensing service provided by an embodiment may include followings.
1. An SF receives a sensing service request. For example, the SF is a sensing function and is used to receive the sensing service request, trigger the initiation of a sensing service, and collect and process the sensing data. For example, a PCF is used to perform authorization for the sensing service based on sensing service characteristics, information of a user of the sensing service, an operation policy of the sensing service, etc. The SF receives the sensing service request from a UE1 (a user of the sensing service). The sensing service request includes location information of the UE. For example, the location information of the UE may include TA information of a TA where the UE is located. The TA information includes but is not limited to TA identification.
2. The SF sends a sensing service request to an AMF. For example, the SF initiates a request for starting the sensing service to the AMF. The request for starting the sensing service includes the sensing service type information and/or the location information of the UE.
3. The AMF requests a PCF for authorization of the sensing service. For example, the AMF initiates an authorization request for the sensing service to the PCF. The authorization request for the sensing service includes the sensing service type information and/or the location information of the UE. The AMF can be other network elements, the PCF can be other network elements with an authorization function, and the SF can directly initiate an authorization request for the sensing service to the PCF.
4. The PCF obtains user subscription information from a UDM.
5. The PCF performs authorization for the sensing service. For example, the PCF authorizes the sensing service based on the sensing service type, the user subscription information and/or determination of an operation policy of the sensing service, determines a sensing data target parameter, and an execution range of the sensing service (such as UE1's TA, and a TA adjacent to the TA), etc. The sensing data target parameter includes but is not limited to parameters such as volume, area, temperature, an actual movement trajectory and/or movement speed of the sensing target, and other parameters.
6. Sensing service authorization. For example, the PCF issues the sensing service authorization to the AMF, the sensing service authorization including range information of the execution range of the sensing service and/or the sensing data target parameter, etc.
7. An execution target of the sensing service is determined. For example, the AMF determines, based on the execution range of the sensing service (such as a TA list containing TA identifications) and RA information of all UEs on the AMF, a UE (i.e., the UE 2) corresponding to RA information containing the execution range of the sensing service as an executor of the sensing service.
8. The sensing service is started. For example, the AMF sends a sensing service start instruction to the corresponding UE2. The sensing service start instruction includes the authorization information such as the above-mentioned collection target of the sensing service.
9. Operation of the sensing data. For example, the UE2 receives the authorization information and starts the sensing data collection.
10. Sensing data reporting. For example, the UE2 reports sensing collection data or sensing processing target parameter to the SF. In a communication process between the UE and the SF, a direct channel can be established between the UE and the SF. In this case, the AMF can send identification information of the SF to the UE, and the UE can discover the SF and establish a communication connection with the SF according to the identification information of the SF. Or the UE establishes a communication connection with the SF through the UPF, and report the sensing data to the SF.
11. Sensing data processing. For example, the SF receives the sensing data. If the sensing data is the original collected data, the SF performs sensing data processing to generate a sensing result.
12. Deliver the sensing result. For example, the SF delivers the sensing result to the UE1.

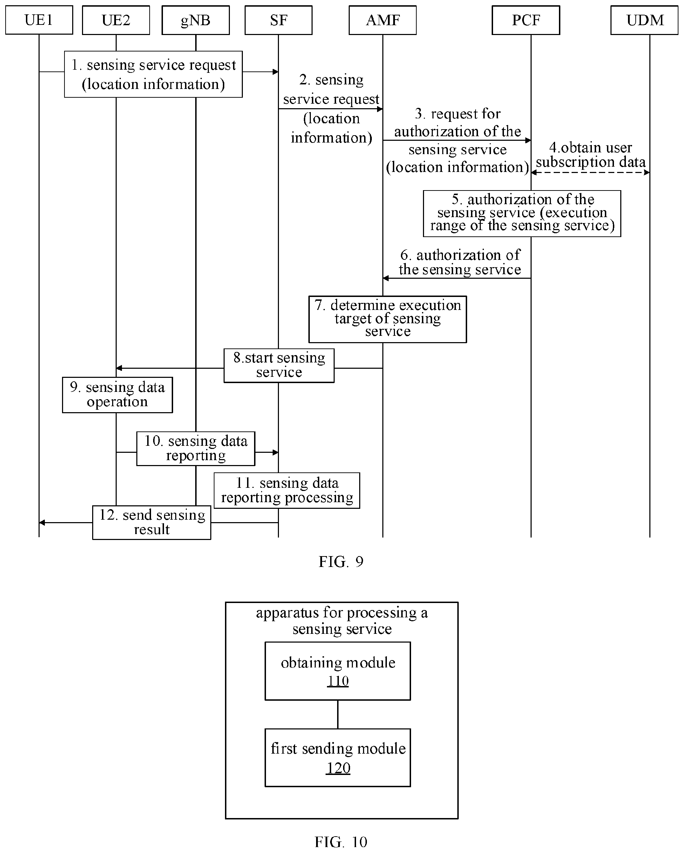

As illustrated in FIG. 10, embodiments of the disclosure provide an apparatus for processing a sensing service. The apparatus includes:
an obtaining module 110, configured to obtain an execution range of a sensing service; and
a first sending module 120, configured to send range information of the execution range to a second network element, in which the range information is used for the second network element to determine an executor of the sensing service.

The second network element is a network element that determines the executor, the executor is a network element or a communication device that collects data of a sensing target of the sensing service, processes and/or reports sensing data.

In an embodiment, the executor includes:
a base station located within the execution range;
   and/or
a communication terminal located within the execution range.

The apparatus for processing a sensing service may be included in a first network element.

In some embodiments, the obtaining module 110 and the first sending module 120 may be program modules. When the program modules are executed by a processor, the determination of the execution range and the transmission of the range information of the execution range can be performed.

In some embodiments, the obtaining module 110 and the first sending module 120 may be software and hardware combination modules. The software and hardware combination modules may include various programmable arrays. The programmable array includes, but is not limited to, a field programmable array and/or a complex programmable array.

In some embodiments, the obtaining module 110 and the first sending module 120 may include various pure hardware modules. The pure hardware module includes but is not limited to an application specific integrated circuit.

In some embodiments, the apparatus further includes:
a first receiving module is configured to receive an authorization request for the sensing service before obtaining the execution range of the sensing service;
in which the authorization request for the sensing service includes: sensing service type information and/or location information of a user of the sensing service.

In some embodiments, the obtaining module 110 is configured to determine the execution range of the sensing service based on the authorization request for the sensing service.

In some embodiments, the obtaining module 110 is configured to determine the execution range of the sensing service based on the authorization request for the sensing service and at least one of user subscription information or an operation policy of the sensing service.

In some embodiments, the execution range includes at least one of:
a cell where a user of the sensing service is located;
the cell where the user of the sensing service is located and one or more neighbor cells of the cell where the user of the sensing service is located;
a tracking area (TA) where the user of the sensing service is located;
the TA where the user of the sensing service is located and one or more neighbor TAs of the TA where the user of the sensing service is located; or
a preset range centered on a location of the user of the sensing service.

In some embodiments, the range information includes at least one of:
an area identified by a TA collection;
an area identified by latitude and longitude; or
an area identified by a cell collection.
In some embodiments, the executor includes:
a base station located within the execution range;
   and/or
a communication terminal located within the execution range.

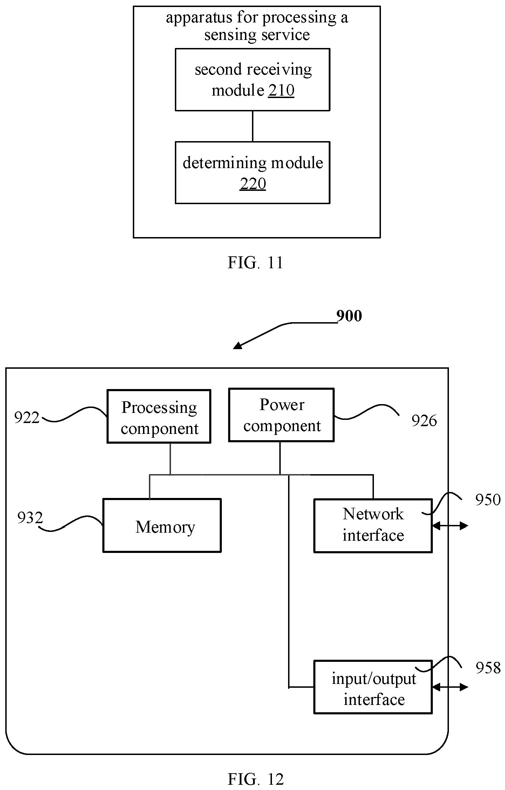

As illustrated in FIG. 11, embodiments of the disclosure provide an apparatus for processing a sensing service. The apparatus includes:
a second receiving module 210, configured to receive range information of an execution range of a sensing service; and
a determining module 220, configured to determine an executor of the sensing service located within the execution range according to the range information.

In some embodiments, the executor includes a network element or a communication device that collects data of a sensing target of the sensing service, processes and/or reports sensing data.

The apparatus for processing a sensing service may be included in a second network element.

In some embodiments, the second receiving module 210 and the determining module 220 may be program modules. When the program modules are executed by a processor, the determination of the execution range and the transmission of the range information of the execution range can be performed.

In some embodiments, the second receiving module 210 and the determining module 220 may be software and hardware combination modules. The software and hardware combination modules may include various programmable arrays. The programmable array includes, but is not limited to, a field programmable array and/or a complex programmable array.

In some embodiments, the obtaining module and the first sending module may include various pure hardware modules. The pure hardware module includes but is not limited to an application specific integrated circuit.

In some embodiments, the apparatus further includes:
a second sending module, configured to send an operation instruction of the sensing service to the executor of the sensing service.

In an embodiment, the operation instruction is used to trigger the executor within the execution range to perform an operation related to the sensing service.

In some embodiments, the second sending module is configured to send an authorization request for the sensing service to a first network element; in which the authorization request for the sensing service includes: sensing service type information and/or location information of a user of the sensing service;
in which receiving the range information includes:
receiving execution range information of the sensing service returned based on the authorization request for the sensing service.

In some embodiments, the executor includes:
a base station located within the execution range;
   and/or
a communication terminal located within the execution range.

Embodiments of the disclosure provide a communication device, including:
a memory for storing processor-executable instructions; and
a processor, coupled to the memory.

The processor is configured to perform the method for processing a sensing service provided by any of the aforementioned technical solutions.

The processor may include various types of storage media, which are non-transitory computer storage media, and can continue to memorize and store information thereon after the communication device is powered off.

The communication device includes a first network element or a second network element.

The processor may be connected to the memory through a bus or the like, and is used to read the executable program stored on the memory, for example, at least one of the methods shown in FIG. 2, FIG. 4 to FIG. 9.

In an exemplary embodiment, there is also provided a non-transitory computer-readable storage medium including instructions, such as a memory 804 including instructions, the instructions can be executed by a processor to implement the above-mentioned method for processing a sensing service, such as the methods illustrated in FIG. 2, FIG. 4 to FIG. 9. For example, the non-transitory computer readable storage medium may be a ROM, a random access memory (RAM), a CD-ROM, a magnetic tape, a floppy disk, an optical data storage device, and the like.

FIG. 12 is a block diagram illustrating a communication device 900 of an embodiment of the disclosure. For example, the communication device 900 may be provided as the first network element or the second network element as mentioned above.

As illustrated in FIG. 12, the communication device 900 includes a processing component 922 consisting of one or more processors, and memory resources represented by a memory 932 for storing instructions that may be executed by the processing component 922, such as applications. The application programs stored in the memory 932 may include one or more modules each corresponding to a set of instructions. In addition, the processing component 922 is configured to execute the instructions to perform any of the methods described foregoing that are applicable to the access device, for example, at least one of the methods shown in FIG. 2, FIG. 4 to FIG. 9.

The communication device 900 may also include a power component 926 configured to perform power management of the communication device 900, a wired or wireless network interface 950 configured to connect the communication device 900 to a network, and an I/O interface 958. The communication device 900 may operate based on an operating system stored in the memory 932, such as Windows Server ^{™}, Mac OS X^{™}, Unix^{™}, Linux^{™}, FreeBSD^{™}, or the like.

Other embodiments of the disclosure may be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It may be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for processing a sensing service, performed by a first network element, comprising:
obtaining an execution range of a sensing service; and
sending range information of the execution range to a second network element, wherein the range information is used for the second network element to determine an executor of the sensing service.

2. The method according to claim 1, before obtaining the execution range of the sensing service, further comprising:
receiving an authorization request for the sensing service;
wherein the authorization request for the sensing service comprises: sensing service type information and/or location information of a user of the sensing service.

3. The method according to claim 2, wherein obtaining the execution range of the sensing service comprises:
determining the execution range of the sensing service based on the authorization request for the sensing service.

4. The method according to claim 3, wherein determining the execution range of the sensing service based on the authorization request for the sensing service comprises:
determining the execution range of the sensing service based on the authorization request for the sensing service and at least one of user subscription information or an operation policy of the sensing service.

5. The method according to any one of claims 1 to 4, wherein the execution range comprises at least one of:
a cell where a user of the sensing service is located;
the cell where the user of the sensing service is located and one or more neighbor cells of the cell where the user of the sensing service is located;
a tracking area (TA) where the user of the sensing service is located;
the TA where the user of the sensing service is located and one or more neighbor TAs of the TA where the user of the sensing service is located; or
a preset range centered on a location of the user of the sensing service.

6. The method according to any one of claims 1 to 5, wherein the range information comprises at least one of:
an area identified by a TA collection;
an area identified by latitude and longitude; or
an area identified by a cell collection.

7. The method according to any one of claims 1 to 5, wherein the executor comprises:
a base station located within the execution range;
and/or
a communication terminal located within the execution range.

8. A method for processing a sensing service, performed by a second network element, comprising:
receiving range information of an execution range of a sensing service; and
determining an executor of the sensing service located within the execution range according to the range information.

9. The method according to claim 8, further comprising:
sending an operation instruction of the sensing service to the executor of the sensing service; wherein the operation instruction is configured to trigger the executor located within the execution range to perform an operation related to the sensing service.

10. The method according to claim 8, further comprising:
sending an authorization request for the sensing service to a first network element; wherein the authorization request for the sensing service comprises: sensing service type information and/or location information of a user of the sensing service;
wherein receiving the range information of the execution range of the sensing service comprises:
receiving execution range information of the sensing service returned based on the authorization request for the sensing service.

11. The method according to claim 8 or 9, wherein the executor comprises:
a base station located within the execution range;
and/or
a communication terminal located within the execution range.

12. An apparatus for processing a sensing service, comprising:
an obtaining module, configured to obtain an execution range of a sensing service; and
a first sending module, configured to send range information of the execution range to a second network element, wherein the range information is used for the second network element to determine an executor of the sensing service.

13. An apparatus for processing a sensing service, comprising:
a second receiving module, configured to receive range information of an execution range of a sensing service; and
a determining module, configured to determine an executor of the sensing service located within the execution range according to the range information.

14. A communication device, comprising a processor, a transceiver, a memory, and an executable program stored on the memory and capable of being executed by the processor; wherein, when the processor executes the executable program, the method of any of claims 1-7 or 8-11 is performed.

15. A computer storage medium having an executable program stored thereon, wherein when the executable program is executed by a processor, the method of any of claims 1-7 or 8-11 is performed.
